# EUROPÄISCHE PATENTANMELDUNG

(11) **EP 1 118 501 A2**
(43) Veröffentlichungstag der Anmeldung: **25.07.2001**
(21) Anmeldenummer: 00124750.1
(22) Anmeldetag: 13.11.2000
(51) Int. Cl.: B60Q 3/02

(54) **Innenleseleuchte**

(30) Priorität: 19.01.2000 DE 20000875 U
(71) Anmelder: FER Fahrzeugelektrik GmbH, 99817 Eisenach (DE)
(72) Erfinder: Tietze, Martin, 99817 Eisenach (DE); Marschall, Hartmut, 99817 Eisenach (DE)
(74) Vertreter: Strasser, Wolfgang

(57) **Zusammenfassung**

Bei einer Innenleseleuchte (1) für Fahrzeuge mit einem Gehäuse (2), in dem eine Lichtquelle (9) und ein Reflektor (10) so angeordnet sind, daß der Reflektor (10) das Licht der Lichtquelle (9) in einer vorgegebenen Richtung bündelt, wobei das Gehäuse (2) mit einem Einbaurahmen (20) verbunden ist, der dazu dient, die Innenleseleuchte (1) im Inneren des Fahrzeugs an diesem zu montieren, ist zur Erzielung eines sehr kleinen Einbauraumes das Gehäuse (2) mit dem Einbaurahmen (20) so verbunden, daß es nach dem Einbau verschwenkt werden kann, um die zentrale Achse (8) des vom Reflektor (10) gebündelten Lichts unterschiedlich auszurichten, und ist koaxial zum Reflektor (10) eine das abgestrahlte Licht in einen vorgegebenen Raumbereich bündelnde Linse (16) am Gehäuse (2) montiert.

## Beschreibung

Die Erfindung betrifft eine Innenleseleuchte für Fahrzeuge, insbesondere für Kraftfahrzeuge gemäß dem Oberbegriff von Anspruch 1.

Solche Innenleseleuchten basieren auf dem Prinzip, daß das von einer Lichtquelle, im allgemeinen einer Glühlampe abgegebene Licht mit Hilfe eines Reflektors gebündelt und durch eine Lichtscheibe abgestrahlt wird, die eine optisch wirksame Struktur besitzt, mit deren Hilfe die jeweils gewünschte Lichtverteilung im Innenraum erzielt werden soll. Da bei ist es oft wünschenswert, die Richtung der Lichtabstrahlung zu verändern. Für diesen Zweck sind technische Lösungen bekannt, bei denen der Reflektor geschwenkt wird. Diese Ausführungsformen benötigen einen großen Einbauraum.

Demgegenüber liegt der Erfindung die Aufgabe zugrunde, eine Innenleseleuchte der eingangs genannten Art zu schaffen, die nur einen sehr kleinen Einbauraum benötigt und es dem Benutzer ermöglicht, die Lichtverteilung im Fahrzeuginnenraum innerhalb eines weiten Bereiches zu verändern.

Zur Lösung dieser Aufgabe sieht die Erfindung die im Anspruch 1 niedergelegten Merkmale vor.

Somit besteht die erfindungsgemäße Innenleseleuchte im Prinzip aus einer geeigneten Lichtquelle, die zum Beispiel von einer Glühlampe, einer Leuchtdiode oder aber auch von dem Austritts-Stirnende einer oder mehrerer Lichtleitfasern gebildet werden kann, und einem optischen System zur Bildung der Lichtbündelgeometrie.

Dieses optische System umfaßt einen entsprechend geformten Reflektor und eine asphärische Linse zwischen denen vorzugsweise eine Blende mit vergleichsweise kleiner Blendenöffnung angeordnet ist.

Die genaue Ausführung dieser Bauelemente kann in Abhängigkeit vom jeweiligen Einbauort im Fahrzeug innerhalb weiter Grenzen variiert werden. So nehmen zum Beispiel der Abstand des Dachhimmels von der Sitzfläche und die Breite der einzelnen Sitzflächen Einfluß auf die Formen dieser Bauelemente.

Die Abstrahlrichtung des Lichtes läßt sich innerhalb weiter Grenzen beliebig durch Schwenken der Innenleseleuchte von Hand einstellen. Die Größe der beleuchteten Fläche kann durch eine axiale Verschiebung der asphärischen Linse bezüglich der Lichtquelle und des Reflektors sowie der Blende und die damit verbundene Änderung des Brennpunktes stufenlos eingestellt werden.

Diese und weitere vorteilhafte Ausgestaltungen der erfindungsgemäßen Innenleseleuchte sind in den Unteransprüchen niedergelegt.

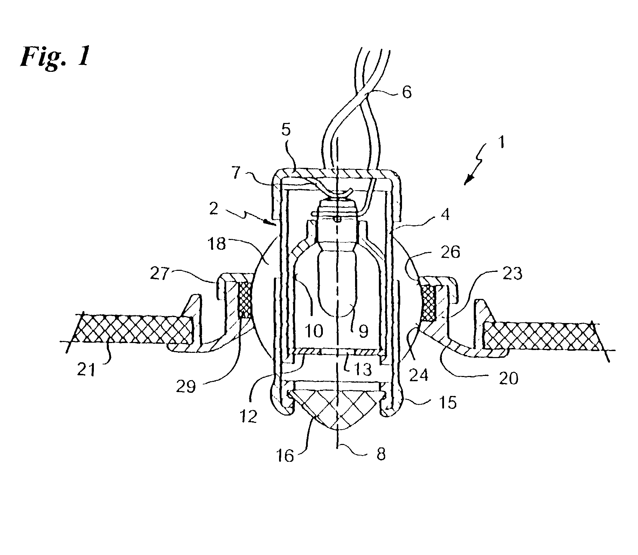

Die Erfindung wird im folgenden anhand eines Ausführungsbeispiels unter Bezugnahme auf die Zeichnung beschrieben; in dieser zeigt die einzige Figur einen Vertikalschnitt durch eine erfindungsgemäße Innenleseleuchte.

Wie man der Figur entnimmt, umfaßt die erfindungsgemäße Innenleseleuchte 1 ein Gehäuse 2, das einen zylindrischen Hauptteil 4 aufweist, der an seinem in der Figur oberen Stirnende durch eine Kappe 5 verschlossen ist, die einen Kontakt 7 trägt, der mit dem Massedraht eines Anschlußkabels 6 in elektrisch leitender Verbindung steht. Weiterhin erstreckt sich durch die Kappe 5 der Spannung führende zweite Draht des Anschlußkabels 6 in elektrisch isolierter Weise.

Im Inneren des zylindrischen Hauptteils 4 sind konzentrisch zu seiner zentralen Achse 8 eine im vorliegenden Beispiel von einer Glühlampe gebildete Lichtquelle 9 und ein Reflektor 10 so montiert, daß der Reflektor 10 das von der Lichtquelle 9 nach hinten, das heißt in der Figur nach oben, und zu den Seiten hin abgestrahlte Licht sammelt und zum unteren Stirnende des zylindrischen Hauptteils 4 reflektiert.

An diesem unteren Stirnende ist eine sich senkrecht zur zentralen Achse 8 erstreckende Blende 12 befestigt, die eine zentrale Öffnung 13 besitzt, deren Durchmesser wesentlich kleiner als der Innendurchmesser des zylindrischen Hauptteils 4 ist. Die relativen Abstände der (nicht dargestellten) Glühwendel der Lichtquelle 9, des Brennpunktes des Reflektors 10 und der Blende 12 bzw. ihrer Öffnung 13 sind so gewählt, daß letztere von den Lichtströmen, die von der Lichtquelle 9 ausgehen bzw. vom Reflektor 10 auf sie gelenkt werden, weitgehend gleichmäßig ausgeleuchtet wird.

Auf den zylindrischen Hauptteil 4 des Gehäuses 2 ist in der Figur von unten her ein hohlzylindrischer Linsenträger 15 aufgeschoben, dessen Innendurchmesser geringfügig größer ist, als der Außendurchmesser des zylindrischen Hauptteils 4, sodaß er auf diesem gelagert ist und in Richtung der zentralen Achse 8 durch einen Benutzer der erfindungsgemäßen Innenleseleuchte 1 zwischen zwei durch nicht dargestellte Anschläge definierten Endlagen hin und her verschoben werden kann. An seinem in der Figur unteren Ende ist am Linsenträger 15 eine asphärische Linse 16 montiert, die die Blende 12 in Richtung der zentralen Achse in der Figur so nach unten ab bildet, daß ein scharf begrenztes Lichtbündel ausgesandt wird, dessen Öffnungswinkel durch das oben erwähnte Verschieben des Linsenträgers 15 in Richtung der zentralen Achse 8 verändert werden kann.

Die vom Hauptteil 4 und dem Linsenträger 15 gebildete Baueinheit erstreckt sich so durch ein teilkugeliges Lagerelement 18, daß die zentrale Achse 8 durch den Kugelmittelpunkt verläuft, in welchem sich in etwa auch das das Licht abstrahlende Element der Lichtquelle 9, das heißt bei einer Glühlampe die Glühwendel befindet.

Das Lagerelement 18 ist Bestandteil eines Einbaurahmens 20, mit dessen Hilfe die Innenleseleuchte 1 in einer Öffnung der Innenverkleidung 21 eines Fahrzeugs, beispielsweise eines Kraftfahrzeugs montiert ist. Das Lagerelement 18 besitzt im Wesentlichen die Form eines hohlzylindrischen, nach oben offenen Bechers 23, dessen Innendurchmesser größer ist als der Außendurchmesser des teilkugeligen Lagerelements 18. Der flache Boden des Bechers 23 weist eine durchgehende Durchtrittsöffnung 24 auf, deren Innendurchmesser kleiner ist als der maximale Außendurchmesser des teilkugeligen Lagerelements 18.

Gleiches gilt auch für die durchgehende Öffnung 26 im flachen Deckelteil einer Kappe 27, die auf dem in der Figur oberen Stirnende des Bechers 23 befestigt werden kann. Die axiale Länge des Bechers 23 und die Durchmesser der Öffnungen 24 und 26 sind so gewählt, daß das teilkugelige Lagerelement 18 zwischen dem Boden des Bechers 23 und der Kappe 27 in drehbarer Weise gehalten und gelagert ist.

Somit kann ein Benutzer der Innenleseleuchte 1 die Richtung der zentralen Achse 8 innerhalb weiter Grenzen beliebig verändern und durch Herausziehen bzw. Hineinschieben des Linsenträgers 15 den Öffnungswinkel des abgestrahlten Lichtbündels verändern.

In dem Raum zwischen der Innenwand des Bechers 23 und der Außenfläche des teilkugeligen Lagerelements 18 ist ein Ring 29 angeordnet, der fest mit dem Becher 23 verbunden ist und reibend an der Außenfläche des teilkugeligen Lagerelements 18 anliegt. Der Ring 29 besteht aus einem geeigneten Material, beispielsweise Filz, das mit dem Material des teilkugeligen Lagerelements 18 ein Reibungspaar bildet, dessen Reibungskraft einen durch die Wahl der genannten Materialien vorgebbaren Wert besitzt. Dieser Ring 29 dient als Brems-bzw. Däpfungseinrichtung, die zwar einerseits eine gezielte Veränderung der Richtung der zentralen Achse 8 ohne weiteres zuläßt, andererseits aber verhindert, daß sich eine vom Benutzer vorgegebene Ausrichtung der erfindungsgemäßen Innenleseleuchte 1 beispielsweise aufgrund von Erschütterungen des Fahrzeuges in nicht beabsichtigter Weise verändert.

Alternativ zu der oben beschriebenen teleskopartigen Lagerung des Linsenträgers 15 auf dem Hauptteil 4 kann zwischen diesen beiden Teilen auch eine Schraubverbindung beispielsweise derart vorgesehen sein, daß der Hauptteil 4 im Bereich seines in der Figur unteren Endes ein steiles Außengewinde besitzt, auf das der Linsenträger 15 mit Hilfe eines entsprechenden Innengewindes aufgeschraubt ist. In diesem Fall kann dann der Öffnungswinkel des von der Innenleseleuchte 1 abgestrahlten Lichtbündels durch ein Verdrehen des Linsenträgers 15 bezüglich des Hauptteils 4 verändert werden. Auch in diesem Fall sorgen Endanschläge dafür, daß der Linsenträger nicht zu weit ein- oder versehentlich abgeschraubt wird.

## Patentansprüche

1. Innenleseleuchte (1) für Fahrzeuge mit einem Gehäuse (2), in dem eine Lichtquelle (9) und ein Reflektor (10) so angeordnet sind, daß der Reflektor (10) das Licht der Lichtquelle (9) in einer vorgegebenen Richtung bündelt, wobei das Gehäuse (2) mit einem Einbaurahmen (20) verbunden ist, der dazu dient, die Innenleseleuchte (1) im Inneren des Fahrzeugs an diesem zu montieren, dadurch gekennzeichnet, daß das Gehäuse (2) mit dem Einbaurahmen (20) so verbunden ist, daß es nach dem Einbau verschwenkt werden kann, um die zentrale Achse (8) des vom Reflektor (10) gebündelten Lichts unterschiedlich auszurichten, und daß koaxial zum Reflektor (10) eine das abgestrahlte Licht in einen vorgegebenen Raumbereich bündelnde Linse (16) am Gehäuse (2) montiert ist.

2. Innenleseleuchte nach Anspruch 1, dadurch gekennzeichnet, daß im Gehäuse (2) zwischen dem Reflektor (10) und der Linse (16) eine zur zentralen Achse (8) koaxiale Blende (12) mit einer im Vergleich zu ihrem Außendurchmesser kleinen zentralen Öffnung (13) so angeordnet ist, daß diese zentrale Öffnung (13) von den von der Lichtquelle (9) direkt ausgehenden und vom Reflektor (10) reflektierten Lichtströmen weitgehend gleichmäßig ausgeleuchtet wird.

3. Innenleseleuchte nach Anspruch 2, dadurch gekennzeichnet, daß die Linse (16) am Gehäuse (2) so montiert ist, daß ihr Abstand von der Blende (12) in Richtung der zentralen Achse (8) durch den Benutzer verändert werden kann.

4. Innenleseleuchte nach Anspruch 3, dadurch gekennzeichnet, daß das Gehäuse (2) einen im wesentlichen hohlzylindrischen Hauptteil (4) umfaßt, in dessen Inneren die Lichtquelle (9), der Reflektor (10) und die Blende (12) so montiert sind, daß die zentrale Achse (8) mit der Längsachse des Hauptteils (4) zusammenfällt, und daß ein hohlzylindrischer Linsenträger (15) vorgesehen ist, an dessen einem Stirnende die Linse (16) koaxial zu seiner Längsachse montiert ist und der im zusammengebauten Zustand zwischen zwei Endlagen bezüglich des Hauptteils (4) in axialer Richtung verschiebbar ist.

5. Innenleseleuchte nach Anspruch 3, dadurch gekennzeichnet, daß das Gehäuse (2) einen im wesentlichen hohlzylindrischen Hauptteil (4) umfaßt, in dessen Inneren die Lichtquelle (9), der Reflektor (10) und die Blende (12) so montiert sind, daß die zentrale Achse (8) mit der Längsachse des Hauptteils (4) zusammenfällt, und daß ein hohlzylindrischer Linsenträger (15) vorgesehen ist, an dessen einem Stirnende die Linse (16) koaxial zu seiner Längsachse montiert ist und der über eine Gewindeverbindung so am Hauptteil (4) gelagert ist, daß im zusammengebauten Zustand durch eine zwischen zwei Endlagen erfolgende Verdrehung des hohlzylindrischen Linsenträgers (15) bezüglich des Hauptteils (4) die Linse (16) in axialer Richtung verschiebbar ist.

6. Innenleseleuchte nach einem der vorhergehenden Ansprüche, dadurch gekennzeichnet, daß das Gehäuse (2) ein teilkugeliges Lagerelement (18) umfaßt, durch das sich der zylindrische Hauptteil (4) so hindurch erstreckt, daß die zentrale Achse (8) durch den Kugelmittelpunkt verläuft, und daß der Einbaurahmen (20) einen das teilkugelige Lagerelement (18) im zusammengebauten Zustand aufnehmenden Halter aufweist.

7. Innenleseleuchte nach Anspruch 6, dadurch gekennzeichnet, daß der das Licht abstrahlende Bereich der Lichtquelle (9) in etwa im Kugelmittelpunkt des teilkugeligen Lagerelements (18) angeordnet ist.

8. Innenleseleuchte nach Anspruch 6 oder 7, dadurch gekennzeichnet, daß eine Bremseinrichtung vorgesehen ist, welche die Drehbewegung des teilkugeligen Lagerelements (18) bezüglich des Einbaurahmens (20) mit einer vorgebbaren Kraft hemmt.

9. Innenleseleuchte nach einem der Ansprüche 6 bis 8, dadurch gekennzeichnet, daß der Halter im wesentlichen die Form eines an seinem einen Stirnende offenen hohlzylindrischen Bechers (23) mit einem Innendurchmesser besitzt, der größer ist als der maximale Außendurchmesser des teilkugeligen Lagerelements (18), und der an seinem anderen Stirnende einen Boden mit einer konzentrischen, durchgehenden Durchtrittsöffnung (24) aufweist, deren Innendurchmesser kleiner als der maximale Außendurchmesser des teilkugeligen Lagerelements (18) ist, und daß eine auf dem offenen Stirnende des Bechers (23) montierbare flache Kappe (27) vorgesehen ist, die eine zentrale, durchgehende Öffnung aufweist, deren Innendurchmesser kleiner ist als der maximale Außendurchmesser des teilkugeligen Lagerelements (18), so daß dieses im montierten Zustand zwischen dem Becher (23) und der auf ihn aufgesetzten Kappe (27) in drehbarer Weise gehalten wird.

10. Innenleseleuchte nach Anspruch 9, dadurch gekennzeichnet, daß die Bremseinrichtung von einem Ring (29) gebildet wird, der so an der Innenwand des Bechers (23) befestigt ist, daß er bei einer Verschwenkung des Gehäuses (2) an dem teilkugeligen Lagerelement (18) reibt, und der aus einem eine gewünschte Reibungskraft erzeugenden Material besteht.

11. Innenleseleuchte nach einem der vorhergehenden Ansprüche, dadurch gekennzeichnet, daß die Linse (16) eine asphärische Linse ist.
